# EUROPEAN PATENT APPLICATION

(11) **EP 4 644 735 A1**
(43) Date of publication of application: **05.11.2025**
(21) Application number: 23912083.5
(22) Date of filing: 25.12.2023
(51) Int. Cl.: F16J 15/34

(54) **SLIDING COMPONENTS**

(30) Priority: 26.12.2022 JP 2022208342
(71) Applicant: Eagle Industry Co., Ltd., Minato-ku Tokyo 105-8587 (JP)
(72) Inventor: SUZUKI Hiroshi, Tokyo 105-8587 (JP); UCHIDA Kenta, Tokyo 105-8587 (JP); FUKUDA Shogo, Tokyo 105-8587 (JP); OU Iwa, Tokyo 105-8587 (JP); IMURA Tadatsugu, Tokyo 105-8587 (JP); OKADA Tetsuzo, Tokyo 105-8587 (JP); KONDO Masahiro, Tokyo 105-8587 (JP)
(74) Representative: WSL Patentanwälte Partnerschaft mbB
(86) International application number: PCT/JP2023/046515
(87) International publication number: WO 2024/143304

(57) **Abstract**

There are provided sliding components capable of enhancing lubrication. In sliding components 10 and 20 of which a pair of sliding surfaces 11 and 21 rotate relative to each other and which partition a sealed fluid space S1 and a leakage space S2 off from each other, at least one of the sliding surfaces is provided with a dynamic pressure generation groove 13, a fluid recovery groove 14 provided on a leakage space S2 side with respect to the dynamic pressure generation groove 13 and including a pressure generation portion 143 on a downstream side in a relative rotation direction, the pressure generation portion 143 being a circumferential end portion, a curved portion, or a bent portion, and a circumferential groove 15 provided between the dynamic pressure generation groove 13 and the fluid recovery groove 14 in a radial direction and extending in a circumferential direction.

## Description

### {TECHNICAL FIELD}

The present invention relates to sliding components, for example, sliding components that rotate relative to each other, for example, sliding components used in a shaft sealing device that seals a rotating shaft of a rotating machine in an automobile, a general industrial machine, or other seal fields, or sliding components used in a bearing of a machine in an automobile, a general industrial machine, or other bearing fields.

### {BACKGROUND ART}

For example, a mechanical seal serving as a shaft sealing device that prevents leakage of a sealed fluid includes a pair of annular sliding components which rotate relative to each other and of which sliding surfaces slide on each other. In such a mechanical seal, in recent years, reducing the loss of energy due to sliding has been desired for environmental measures and the like.

For example, in a mechanical seal as described in Patent Citation 1, a plurality of dimples are provided in a circumferential direction on a sliding surface of a stationary seal ring. The dimple is formed in a crank shape including a cavitation formation region and a positive pressure generation region. The cavitation formation region is disposed on a low-pressure fluid side, and is formed in a groove shape extending in the circumferential direction. The positive pressure generation region is disposed on a high-pressure fluid side, and is formed in a groove shape extending in the circumferential direction. In addition, a downstream end of the cavitation formation region in a rotation direction and an upstream end of the positive pressure generation region in the rotation direction communicate with each other.

As a rotating seal ring rotates, the dimple guides a sealed fluid from the cavitation formation region on an upstream side in the rotation direction to the positive pressure generation region on a downstream side in the rotation direction, and generates positive pressure at the downstream end. Since a mating sliding surface floats due to the positive pressure and the sealed fluid is introduced into a gap between the sliding surfaces, the loss of energy due to sliding can be reduced. In addition, the dimple can recover the sealed fluid moved to a low-pressure space side, due to the negative pressure generated at the upstream end of the cavitation formation region in the rotation direction.

### {CITATION LIST}

### {Patent Literature}

Patent Citation 1: JP 6058018 B2 (Pages 7 and 8, FIG. 4)

### { SUMMARY OF INVENTION}

### {Technical Problem}

In such sliding components as in Patent Citation 1, since the positive pressure generation region of the dimple is disposed close to a sealed fluid space, a part of the sealed fluid can be recovered on the high-pressure fluid side. However, the positive pressure generation regions of the dimples are distributed in the circumferential direction, and are disposed close to a sealed fluid space side. As a result, since the positive pressure generated in the circumferential direction and a radial direction between the sliding surfaces becomes uneven, a floating balance is difficult to achieve, so that lubrication is impaired, which is a risk.

The present invention has been made in view of such problems, and an object of the present invention is to provide sliding components capable of enhancing lubrication.

### {Solution to Problem}

In order to solve the foregoing problems, sliding components according to the present invention are sliding components of which a pair of sliding surfaces rotate relative to each other and which partition a sealed fluid space and a leakage space off from each other. At least one of the sliding surfaces is provided with a dynamic pressure generation groove, a fluid recovery groove provided on a leakage space side with respect to the dynamic pressure generation groove and including at least one pressure generation portion that is a circumferential end portion, a curved portion, or a bent portion, and a circumferential groove provided between the dynamic pressure generation groove and the fluid recovery groove in a radial direction and extending in a circumferential direction. According to the aforesaid feature of the present invention, positive pressure can be generated at different positions in the radial direction on the sliding surface by the dynamic pressure generation groove and the pressure generation portion of the fluid recovery groove. Further, since a sealed fluid space side and the leakage space side of the sliding surface are partitioned off from each other by the circumferential groove, interference between the positive pressure generated in the dynamic pressure generation groove and the positive pressure generated in the fluid recovery groove is suppressed. As a result, since positive pressure can be stably generated at a plurality of locations in the circumferential direction and the radial direction, the floating balance between the sliding components is improved, so that lubrication can be enhanced.

It may be preferable that the fluid recovery groove includes a first groove portion extending in the circumferential direction, and a second groove portion curved or bent from the first groove portion and extending toward the circumferential groove, and the pressure generation portion is a bent portion between the first groove portion and the second groove portion. According to this preferable configuration, positive pressure can be generated at the bent portion between the first groove portion and the second groove portion, and a fluid in the fluid recovery groove can be guided toward the circumferential groove.

It may be preferable that the circumferential groove has an annular shape. According to this preferable configuration, since the sealed fluid space side and the leakage space side are partitioned off from each other over the entire circumference in the circumferential direction, interference between the positive pressure generated in the dynamic pressure generation groove and the positive pressure generated in the fluid recovery groove can be further prevented.

It may be preferable that the fluid recovery groove communicates with the circumferential groove. According to this preferable configuration, since positive pressure can be prevented from being generated at an end portion on a circumferential groove side of the second groove portion of the fluid recovery groove, positive pressure in the dynamic pressure generation groove is not affected. In addition, the fluid can be reliably recovered by the fluid recovery groove.

It may be preferable that the one of the sliding surfaces is further provided with a communication groove that causes the circumferential groove and the sealed fluid space to communicate with each other. According to this preferable configuration, the positive pressure on the sealed fluid space side of the sliding surface can be prevented from becoming excessively high.

It may be preferable that the circumferential groove is deeper than the fluid recovery groove. According to this preferable configuration, the sealed fluid that has flowed into a gap between the sliding surfaces is easily recovered by the circumferential groove. Further, the positive pressure on the sealed fluid space side of the sliding surface can be prevented from becoming excessively high.

It may be preferable that an upstream end of the first groove portion of the fluid recovery groove and the bent portion of the adjacent fluid recovery groove on an upstream side in the relative rotation overlap each other in the circumferential direction. According to this preferable configuration, the fluid recovery groove can efficiently recover the sealed fluid that has flowed into the gap between the sliding surfaces from the pressure generation portion of the adjacent fluid recovery groove on the upstream side in the relative rotation.

It may be preferable that the adjacent first groove portions are aligned in one circle line. According to this preferable configuration, the first groove portion can guide the sealed fluid along the rotation direction. In addition, the sealed fluid that has flowed into the gap between the sliding surfaces from the pressure generation portion of the adjacent fluid recovery groove on the upstream side in the relative rotation is also easily moved along the rotation direction. Accordingly, the sliding components can evenly recover the sealed fluid.

### {BRIEF DESCRIPTION OF DRAWINGS}

FIG. 1 is a longitudinal sectional view illustrating one example of a mechanical seal including sliding components according to a first embodiment of the present invention.
FIG. 2 is a view of a sliding surface of a stationary seal ring in the first embodiment when viewed in an axial direction.
FIG. 3 is a partially enlarged view of FIG. 2.
FIG. 4 is a view of a sliding surface of a stationary seal ring as one of sliding components according to a second embodiment of the present invention when viewed in the axial direction.
FIG. 5 is a partially enlarged view of a sliding surface of a stationary seal ring as one of sliding components according to a third embodiment of the present invention when viewed in the axial direction.
FIG. 6 is a partially enlarged view of a sliding surface of a stationary seal ring as one of sliding components according to a fourth embodiment of the present invention when viewed in the axial direction.
FIG. 7 is a partially enlarged view of a sliding surface of a stationary seal ring as one of sliding components according to a fifth embodiment of the present invention when viewed in the axial direction.
FIG. 8 is a partially enlarged view of a sliding surface of a stationary seal ring as one of sliding components according to a sixth embodiment of the present invention when viewed in the axial direction.
FIG. 9 is a partially enlarged view of a sliding surface of a stationary seal ring as one of sliding components according to a seventh embodiment of the present invention when viewed in the axial direction.
FIG. 10 is a partially enlarged view of a sliding surface of a stationary seal ring as one of sliding components according to an eighth embodiment of the present invention when viewed in the axial direction.
FIG. 11 is a partially enlarged view of a sliding surface of a stationary seal ring as one of sliding components according to a ninth embodiment of the present invention when viewed in the axial direction.
FIG. 12 is a partially enlarged view of a sliding surface of a stationary seal ring as one of sliding components according to a tenth embodiment of the present invention when viewed in the axial direction.
FIG. 13 is a partially enlarged view of a sliding surface of a stationary seal ring as one of sliding components according to an eleventh embodiment of the present invention when viewed in the axial direction.
FIG. 14 is a partially enlarged view of a sliding surface of a stationary seal ring as one of sliding components according to a twelfth embodiment of the present invention when viewed in the axial direction.
FIG. 15 is a view of a sliding surface of a stationary seal ring as one of sliding components according to a thirteenth embodiment of the present invention when viewed in the axial direction.
FIG. 16 is a view of a sliding surface of a stationary seal ring as one of sliding components according to a fourteenth embodiment of the present invention when viewed in the axial direction.
FIG. 17 is a partially enlarged view of a sliding surface of a stationary seal ring as one of sliding components according to a fifteenth embodiment of the present invention when viewed in the axial direction.
FIG. 18 is a view of a sliding surface of a stationary seal ring as one of sliding components according to a sixteenth embodiment of the present invention when viewed in the axial direction.
FIG. 19 is a view of a sliding surface of a stationary seal ring as one of sliding components according to a seventeenth embodiment of the present invention when viewed in the axial direction.

### {DESCRIPTION OF EMBODIMENTS}

Modes for implementing sliding components according to the present invention will be described below based on embodiments.

### {First embodiment}

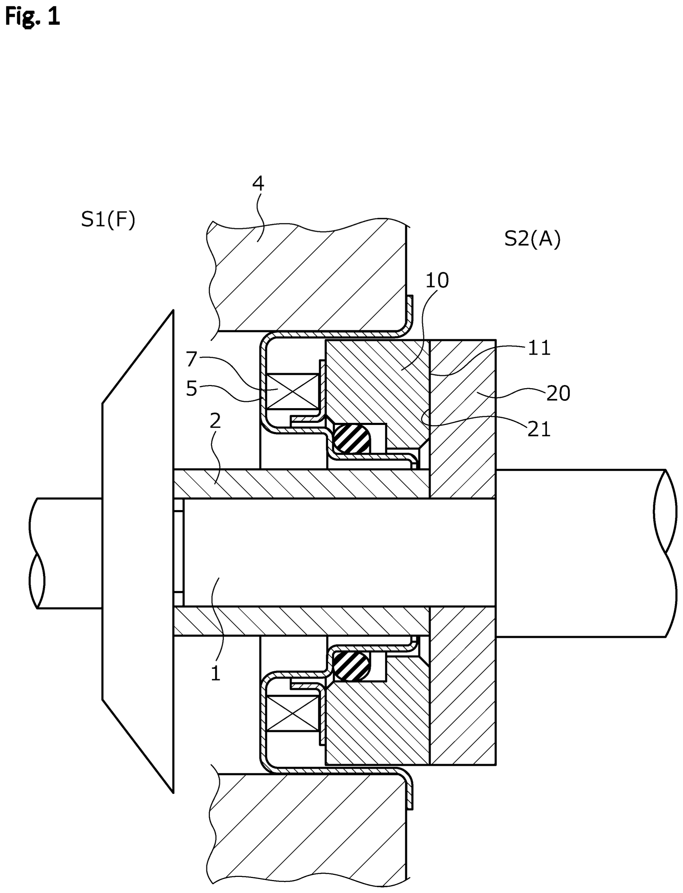

Sliding components according to a first embodiment will be described with reference to FIGS. 1 to 3. Incidentally, in the present embodiment, a mode in which the sliding components are applied to a mechanical seal will be described as an example.

In addition, in the mechanical seal, a sealed fluid F serving as a first fluid and atmosphere A serving as a second fluid will be described as existing in an inner space S1 and an outer space S2, respectively, and a radial inner side and a radial outer side of the sliding components constituting the mechanical seal will be described as a sealed fluid space side (high-pressure side) and a leakage space side (low-pressure side), respectively. In addition, for convenience of description, in the drawings, dots may be added to grooves and the like formed on a sliding surface.

A mechanical seal illustrated in FIG. 1 is an outside mechanical seal that seals the sealed fluid F attempting to leak from the radial inner side toward the radial outer side of sliding surfaces, and that allows the outer space S2 to communicate with the atmosphere A. Incidentally, in the present embodiment, a mode in which the sealed fluid F is a high-pressure liquid and the atmosphere A is a gas having a lower pressure than the sealed fluid F will be provided as an example.

The mechanical seal is mainly composed of a stationary seal ring 10 serving as a sliding component having an annular shape, and a rotating seal ring 20 serving as another sliding component having an annular shape. The rotating seal ring 20 is provided on a rotating shaft 1 via a sleeve 2 to be rotatable together with the rotating shaft 1. The stationary seal ring 10 is provided on a seal cover 5, which is fixed to a housing 4 of an attached device, to be non-rotatable and movable in an axial direction. The stationary seal ring 10 is biased in the axial direction by an elastic member 7, and a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (as an example of hard material) or a combination of SiC and carbon (as an example of soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

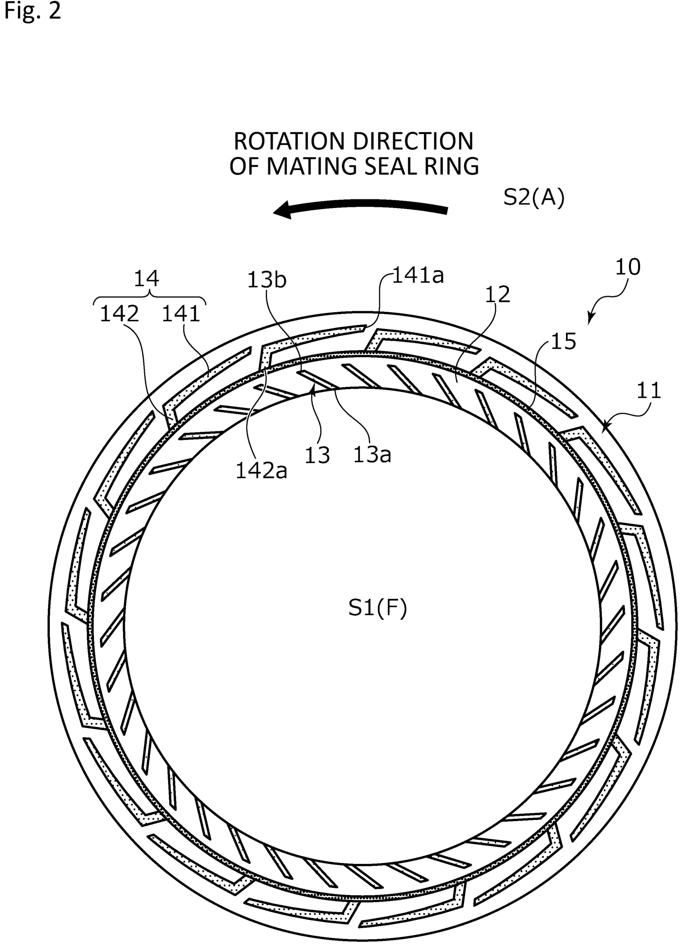

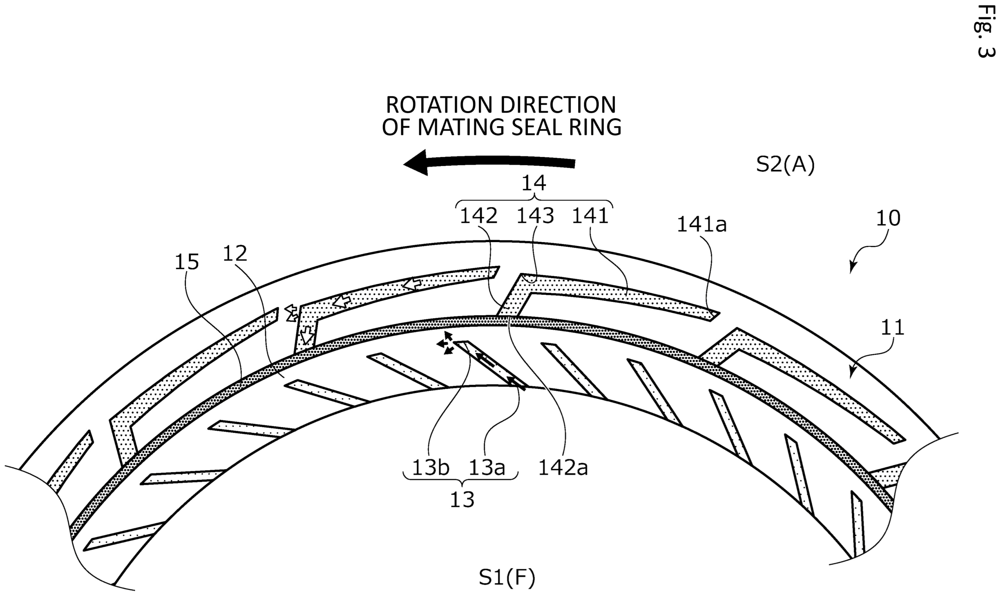

As illustrated in FIGS. 2 and 3, the rotating seal ring 20 that is a mating seal ring slides counterclockwise relative to the stationary seal ring 10 as indicated by a solid arrow.

The sliding surface 11 of the stationary seal ring 10 is provided with dynamic pressure grooves 13 serving as dynamic pressure generation grooves, fluid recovery grooves 14, and an annular groove 15 serving as a circumferential groove.

The dynamic pressure grooves 13 are evenly disposed in a circumferential direction on the radial inner side of the sliding surface 11 (for example, 36 in the present embodiment).

Each of the dynamic pressure grooves 13 extends in an arc shape from a radial inner end 13a toward a radial outer end 13b while being inclined toward a downstream side in a rotation direction of the rotating seal ring 20, namely, toward the downstream side in relative rotation. The radial inner end 13a of the dynamic pressure groove 13 communicates with the inner space S1, and the radial outer end 13b serving as a dynamic pressure generation portion is closed.

Incidentally, the dynamic pressure groove 13 is not limited to having an arc shape when viewed in the axial direction, and may be linear, a Rayleigh step, a spiral groove, herringbone-shaped, or the like. In addition, the dynamic pressure groove 13 may be a dimple surrounded by a land.

The annular groove 15 is provided on the radial outer side of the dynamic pressure grooves 13. The annular groove 15 is provided concentrically with the stationary seal ring 10. A portion of the sliding surface 11 other than the dynamic pressure grooves 13, the fluid recovery grooves 14, and the annular groove 15 is a flat land 12.

In addition, the annular groove 15 is formed deeper than the dynamic pressure grooves 13 or the fluid recovery grooves 14. Incidentally, preferably, the annular groove 15 has a depth more than or equal to ten times that of the dynamic pressure grooves 13 or the fluid recovery grooves 14.

The fluid recovery grooves 14 are evenly disposed in the circumferential direction on the radial outer side of the annular groove 15 (for example, 16 in the present embodiment). A first groove portion 141 of the fluid recovery groove 14, which will be described later, partially overlaps, in a radial direction, a second groove portion 142 of the fluid recovery groove 14 disposed on an upstream side in the relative rotation.

The fluid recovery groove 14 is composed of the first groove portion 141 and the second groove portion 142. The fluid recovery groove 14 is formed, for example, to the same depth as the dynamic pressure groove 13, and has a rectangular cross section. Incidentally, the depth of the fluid recovery groove 14 may be different from the depth of the dynamic pressure groove 13.

The first groove portion 141 extends in an arc shape in the circumferential direction while being inclined to the radial inner side from the upstream side in the rotation direction of the rotating seal ring 20 toward the downstream side in the rotation direction, namely, from the upstream side toward the downstream side in the relative rotation direction. The first groove portion 141 of the present embodiment has a circumferential component larger than a radial component. Incidentally, it is preferable that the first groove portion 141 has at least a circumferential component. Namely, in the present invention, it is preferable that the circumferential direction includes at least a circumferential component. The same applies to the radial direction, and it is preferable that the radial direction includes at least a radial component.

The first groove portion 141 has a groove width that gradually increases as the first groove portion 141 extends from the upstream side in the rotation direction of the rotating seal ring 20 toward the downstream side in the rotation direction. An end portion 141a of the first groove portion 141 on the upstream side in the rotation direction of the rotating seal ring 20 is closed. An end portion of the first groove portion 141 on the downstream side in the rotation direction of the rotating seal ring 20 communicates with the second groove portion 142.

The second groove portion 142 extends substantially linearly from the end portion of the first groove portion 141 on the downstream side in the rotation direction of the rotating seal ring 20 toward the radial inner side while being inclined to the downstream side in the rotation direction of the rotating seal ring 20. In other words, the second groove portion 142 is inclined in a direction opposite to the dynamic pressure groove 13.

In other words, the second groove portion 142 is bent at an obtuse angle from the first groove portion 141, and extends toward the annular groove 15. A corner portion 143 having a bent shape and serving as a pressure generation portion, namely, a bent portion is formed between the first groove portion 141 and the second groove portion 142. In other words, the corner portion 143 is a portion where the curvature of the fluid recovery groove 14 changes, and is a bent portion of the fluid recovery groove 14 on the downstream side in the relative rotation direction. The corner portion 143 is provided at a terminal end of the first groove portion 141. Incidentally, the corner portion between the first groove portion 141 and the second groove portion 142 may be formed to be curved.

The second groove portion 142 of the present embodiment has a radial component larger than a circumferential component. Incidentally, it is preferable that the second groove portion 142 has at least a radial component. Namely, the second groove portion 142 has a smaller circumferential component and a larger radial component than the first groove portion 141.

An end portion 142a of the second groove portion 142 on the downstream side in the rotation direction of the rotating seal ring 20 communicates with the annular groove 15.

Next, the action of the dynamic pressure grooves 13 and the fluid recovery grooves 14 during relative rotation between the stationary seal ring 10 and the rotating seal ring 20 will be briefly described.

As illustrated in FIG. 3, when the rotating seal ring 20 rotates relative to the stationary seal ring 10, the fluid in the dynamic pressure groove 13, the fluid recovery groove 14, and the annular groove 15 moves in accordance with the relative rotation of the rotating seal ring 20.

Specifically, in the dynamic pressure groove 13, as illustrated by black arrows in FIG. 3, the sealed fluid F moves from the radial inner end 13a toward the radial outer end 13b. Accordingly, positive pressure is generated at the radial outer end 13b and in the vicinity thereof. In addition, the sealed fluid F is constantly supplied into the dynamic pressure groove 13 from the inner space S1 through the radial inner end 13a.

A part of the sealed fluid F discharged into a gap between the sliding surfaces 11 and 21 from the radial outer end 13b and the vicinity thereof flows into the annular groove 15.

Meanwhile, in the fluid recovery groove 14, as illustrated by white arrows in FIG. 3, the atmosphere A moves from the end portion 141a toward the end portion 142a. Accordingly, a slight positive pressure is generated at the corner portion 143 of the fluid recovery groove 14 and in the vicinity thereof.

A part of the sealed fluid F discharged into the gap between the sliding surfaces 11 and 21 from the corner portion 143 of the fluid recovery groove 14 flows into the fluid recovery groove 14 adjacent thereto in the circumferential direction, and another part of the sealed fluid F flows into the annular groove 15.

In addition, since the pressure in a region on an inner space S1 side of the annular groove 15 is higher than the pressure in a region on an outer space S2 side of the annular groove 15, a part of the sealed fluid F may leak across the annular groove 15 to the inner space S1 side.

A part of the sealed fluid F that has flowed across the annular groove 15 toward the outer space S2 side is suctioned into the fluid recovery groove 14, and is returned to the annular groove 15 from the end portion 142a, and the movement of another part of the sealed fluid F to the outer space S2 side is restricted by the positive pressure generated at the corner portion 143 and in the vicinity thereof. Therefore, the sealed fluid F is prevented from leaking into the outer space S2.

As described above, positive pressure can be generated on the radial inner side and the radial outer side of the sliding surface 11, the annular groove 15 being sandwiched between the radial inner side and the radial outer side, by the radial outer end 13b of each of the dynamic pressure grooves 13 and the corner portion 143 of each of the fluid recovery grooves 14. In addition, the dynamic pressure grooves 13 and the fluid recovery grooves 14 are evenly disposed in the circumferential direction. As a result, since positive pressure can be evenly generated in the circumferential direction on the radial inner side and the radial outer side of the sliding surface 11, the annular groove 15 being sandwiched between the radial inner side and the radial outer side, the floating balance between the stationary seal ring 10 and the rotating seal ring 20 can be improved, so that lubrication between the sliding surfaces 11 and 21 can be enhanced.

In addition, since a region on the sliding surface 11 where the dynamic pressure grooves 13 are provided and a region where the fluid recovery grooves 14 are provided are partitioned off from each other over the entire circumference in the circumferential direction by the annular groove 15, interference between the positive pressure generated in the dynamic pressure grooves 13 and the positive pressure generated in the fluid recovery grooves 14 is suppressed.

In addition, the fluid recovery groove 14 includes the corner portion 143 where the first groove portion 141 and the second groove portion 142 are bent. According to this configuration, when the stationary seal ring 10 and the rotating seal ring 20 rotate relative to each other, positive pressure can be generated at the corner portion 143.

In addition, the sealed fluid F that has flowed out to the radial outer side of the annular groove 15 can be recovered over a wide range in the circumferential direction by the first groove portion 141 extending in the circumferential direction. Further, the sealed fluid F recovered by the first groove portion 141 can be guided to the annular groove 15 by the second groove portion 142 extending in the radial direction.

In addition, the end portion 142a of the second groove portion 142 communicates with the annular groove 15. According to this configuration, since positive pressure can be prevented from being generated at the end portion 142a of the second groove portion 142 of the fluid recovery groove 14, the positive pressure generated at the radial outer end 13b of the dynamic pressure groove 13 is not affected.

In addition, since the fluid in the fluid recovery groove 14 can be constantly discharged to the annular groove 15, the sealed fluid F can be reliably recovered without reducing the pumping function of the fluid recovery groove 14.

In addition, since the annular groove 15 is deeper than the fluid recovery groove 14, the sealed fluid F that has flowed into the gap between the sliding surfaces 11 and 21 is easily recovered in the annular groove 15. Therefore, the positive pressure in a region of the sliding surface 11 on the inner space S1 side with respect to the annular groove 15 can be prevented from becoming excessively high.

Further, since the pressure in the fluid recovery groove 14 is released by the annular groove 15, a decrease in the pumping function of the fluid recovery groove 14 can be further suppressed.

In addition, since the dynamic pressure groove 13 communicates with the inner space S1 side, the sealed fluid F in the dynamic pressure groove 13 is not depleted, and the dynamic pressure generation effect is high.

In addition, since the dynamic pressure groove 13 does not communicate with the annular groove 15, the dynamic pressure groove 13 can stably generate positive pressure without being affected by fluctuations in the pressure of the annular groove 15.

In addition, the width of the first groove portion 141 is increased as the first groove portion 141 extends from the upstream side toward the downstream side in the rotation direction of the rotating seal ring 20. Accordingly, the fluid recovery groove 14 easily generates relative negative pressure in the first groove portion 141.

In addition, the end portion 141a of the first groove portion 141 is disposed in the vicinity of the radial outer side of the corner portion 143 of the fluid recovery groove 14 on the upstream side in the rotation direction of the rotating seal ring 20. Therefore, the sealed fluid F that has flowed into the gap between the sliding surfaces 11 and 21 from the corner portion 143 and the vicinity thereof is recovered in the first groove portion 141 of the fluid recovery groove 14 located on the downstream side in the rotation direction.

In addition, the closer the location is to the upstream side in the rotation direction of the rotating seal ring 20, the larger the relative negative pressure generated in the first groove portion 141 becomes. Therefore, the first groove portion 141 can recover the sealed fluid F that has moved further toward the outer space S2 side from the fluid recovery groove 14 located on the upstream side in the rotation direction of the rotating seal ring 20.

Incidentally, in the present embodiment, a mode in which the end portion 142a of the second groove portion 142 communicates with the annular groove 15 has been provided as an example; however, the present invention is not limited thereto, and the end portion of the second groove portion may be a closed end portion, namely, may not communicate with the annular groove. In this case, since positive pressure can be generated at the closed end portion of the second groove portion and in the vicinity thereof, a good pressure balance is achieved. In addition, the fluid that has flowed into the gap between the sliding surfaces from the closed end portion of the second groove portion is recovered in the annular groove.

In addition, in the present embodiment, a mode in which the annular groove 15 is provided between the dynamic pressure grooves 13 and the fluid recovery grooves 14 has been provided as an example; however, the present invention is not limited thereto, and for example, the circumferential groove may have a C-shape, or may be a plurality of arc-shaped grooves provided in the circumferential direction. It is preferable that the circumferential groove is provided at least between the dynamic pressure generation portion of the dynamic pressure groove and the pressure generation portion of the fluid recovery groove.

In addition, in the present embodiment, a mode in which the annular groove 15 is formed deeper than the dynamic pressure grooves 13 or the fluid recovery grooves 14; however, the annular groove 15 may have the same depth as the dynamic pressure grooves 13 or the fluid recovery grooves 14.

In addition, in the present embodiment, a mode in which the fluid recovery groove 14 has a rectangular cross section; however, the cross-sectional shape may be a U-shape, a semicircular shape, or a triangular shape, and may be changed as appropriate. The same applies to the dynamic pressure groove 13.

In addition, in the present embodiment, a mode in which the corner portion 143 that is a bent portion of the fluid recovery groove 14 functions as a pressure generation portion has been provided as an example; however, the present invention is not limited thereto, and a pressure generation portion may be provided at a location other than the bent portion of the fluid recovery groove 14.

In addition, in the present embodiment, the configuration in which the radial outer ends 13b of the dynamic pressure grooves 13 are disposed on the same circle has been provided; however, the present invention is not limited thereto, and the position of the radial outer end of each of the dynamic pressure grooves may be changed as appropriate. For example, the radial outer ends of the dynamic pressure grooves may be disposed to be gradually located from the radial outer side to the radial inner side from the upstream side toward the downstream side in the relative rotation direction. In such a configuration, the stationary seal ring 10 can generate dynamic pressure at different positions in the radial direction, so that the floating balance with the rotating seal ring 20 can be further improved.

### {Second embodiment}

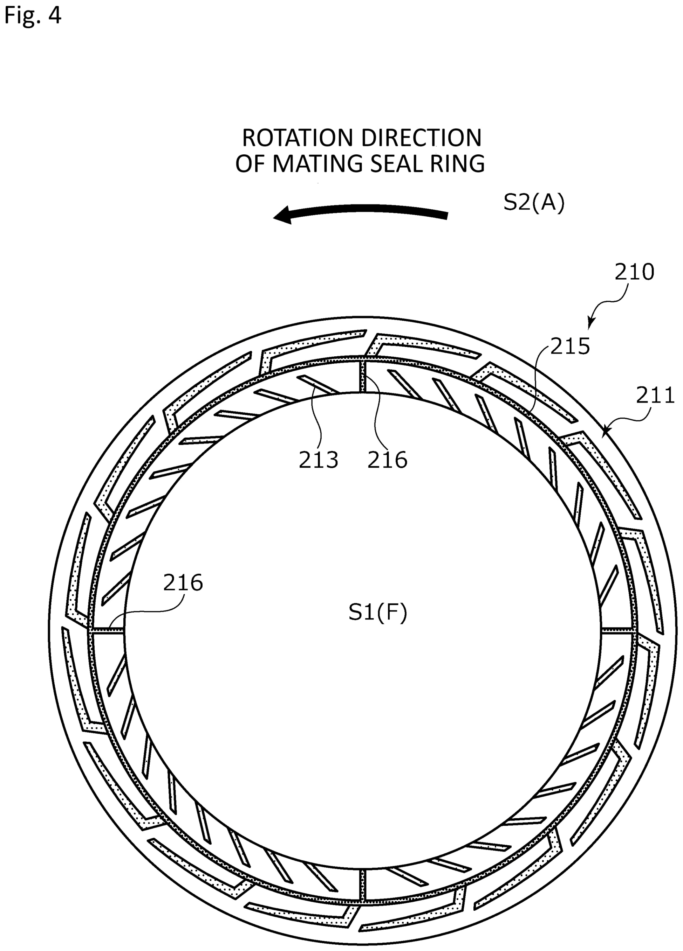

Next, sliding components according to a second embodiment will be described with reference to FIG. 4. Incidentally, the description of configurations that are the same as and overlap with the configurations of the first embodiment will be omitted.

As illustrated in FIG. 4, a stationary seal ring 210 as one of the sliding components according to the second embodiment includes communication grooves 216 that allow a communication between an annular groove 215 and the inner space S1. A plurality of the communication grooves 216 are provided in the circumferential direction (for example, four in the present embodiment).

According to this configuration, since the positive pressure generated at dynamic pressure generation grooves 213 can be reduced to the pressure in the inner space S1 through the annular groove 215 and the communication grooves 216, the positive pressure in a region on the inner space S1 side of a sliding surface 211 with respect to the annular groove 215 can be prevented from becoming excessively high. Accordingly, since it can be made difficult for the sealed fluid F to enter a region on the outer space S2 side of the sliding surface 211 with respect to the annular groove 215, leakage of the sealed fluid F to the outer space S2 side can be suppressed.

Incidentally, in the second embodiment, a mode in which the communication grooves 216 communicate with the inner space S1 has been provided as an example; however, as long as the communication grooves extend to the vicinity of the inner space S1, radial inner ends of the communication grooves may be closed, namely, may not communicate with the inner space S1.

### {Third embodiment}

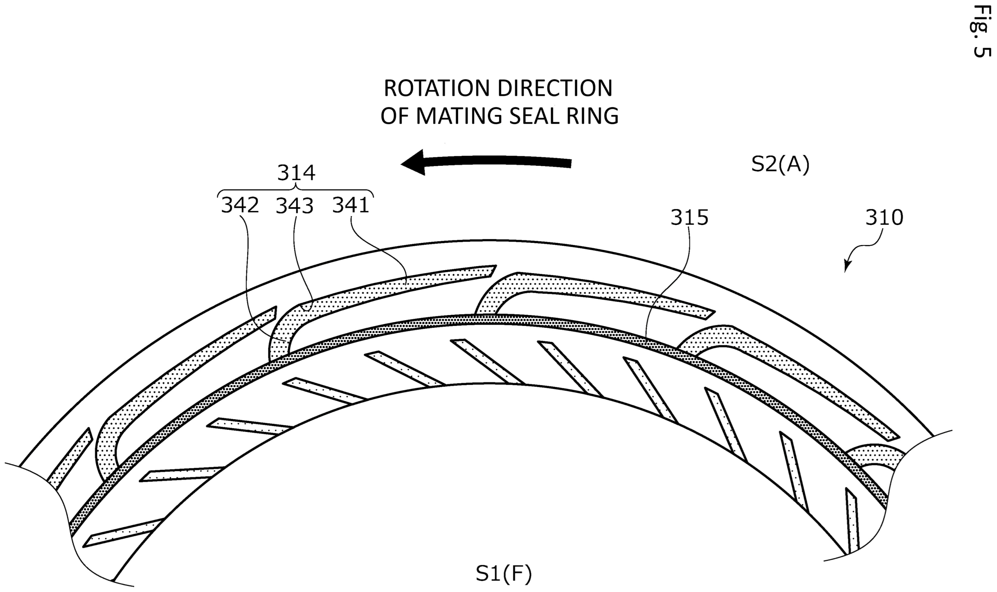

Next, sliding components according to a third embodiment will be described with reference to FIG. 5. Incidentally, the description of configurations that are the same as and overlap with the configurations of the first embodiment will be omitted.

As illustrated in FIG. 5, in a stationary seal ring 310 as one of the sliding components according to the third embodiment, the shape of a fluid recovery groove 314 is different from the shape of the fluid recovery groove 14 of the first embodiment.

A second groove portion 342 of the fluid recovery groove 314 of the third embodiment extends in an arc shape from a downstream end portion of a first groove portion 341 in the rotation direction of the rotating seal ring 20 toward an annular groove 315 so as to be convex toward the radial outer side. Accordingly, a corner portion 343 of the fluid recovery groove 314 is formed more gently than the corner portion 143 of the first embodiment. Namely, the corner portion 343 has a curved shape. In other words, the corner portion 343 is a portion where the curvature of the fluid recovery groove 314 changes, and is a curved portion of the fluid recovery groove 314 on the downstream side in the relative rotation direction.

According to this configuration, the fluid recovery groove 314 of the third embodiment further suppresses the generation of positive pressure at the corner portion 343, and more easily returns the recovered fluid into the annular groove 315, compared to the fluid recovery groove 14 of the first embodiment.

### {Fourth embodiment}

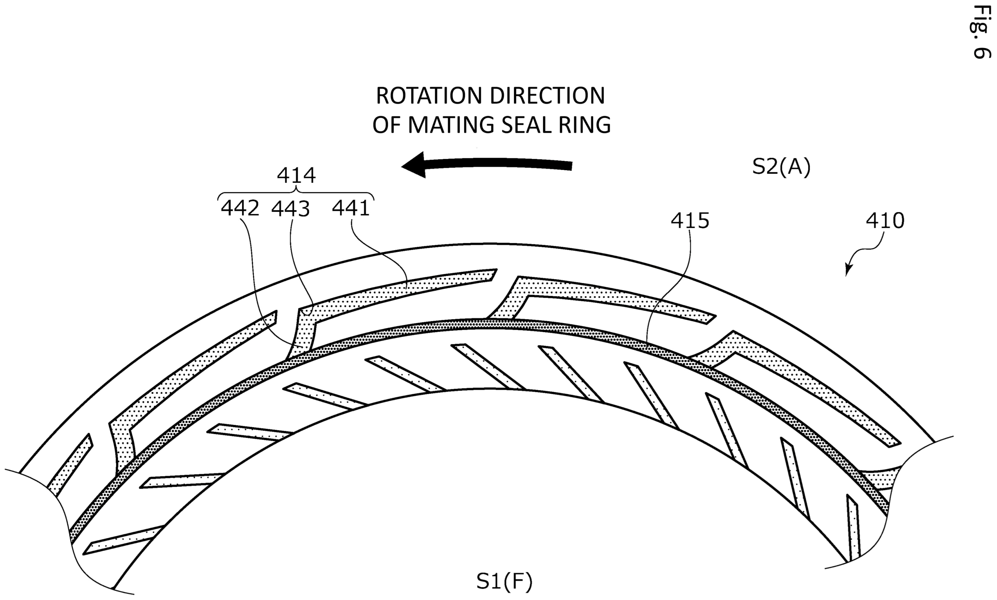

Next, sliding components according to a fourth embodiment will be described with reference to FIG. 6. Incidentally, the description of configurations that are the same as and overlap with the configurations of the first embodiment will be omitted.

As illustrated in FIG. 6, in a stationary seal ring 410 as one of the sliding components according to the fourth embodiment, the shape of a fluid recovery groove 414 is different from the shape of the fluid recovery groove 14 of the first embodiment.

A second groove portion 442 of the fluid recovery groove 414 of the fourth embodiment extends in an arc shape from a downstream end portion of a first groove portion 441 in the rotation direction of the rotating seal ring 20 toward an annular groove 415 so as to be convex toward the radial inner side. Accordingly, a corner portion 443 of the fluid recovery groove 414 is formed at a more acute angle than the corner portion 143 of the first embodiment.

According to this configuration, in the fluid recovery groove 414 of the fourth embodiment, the positive pressure generated at the corner portion 443 is higher and the flow rate returning into the annular groove 415 is smaller compared to the fluid recovery groove 14 of the first embodiment.

### {Fifth embodiment}

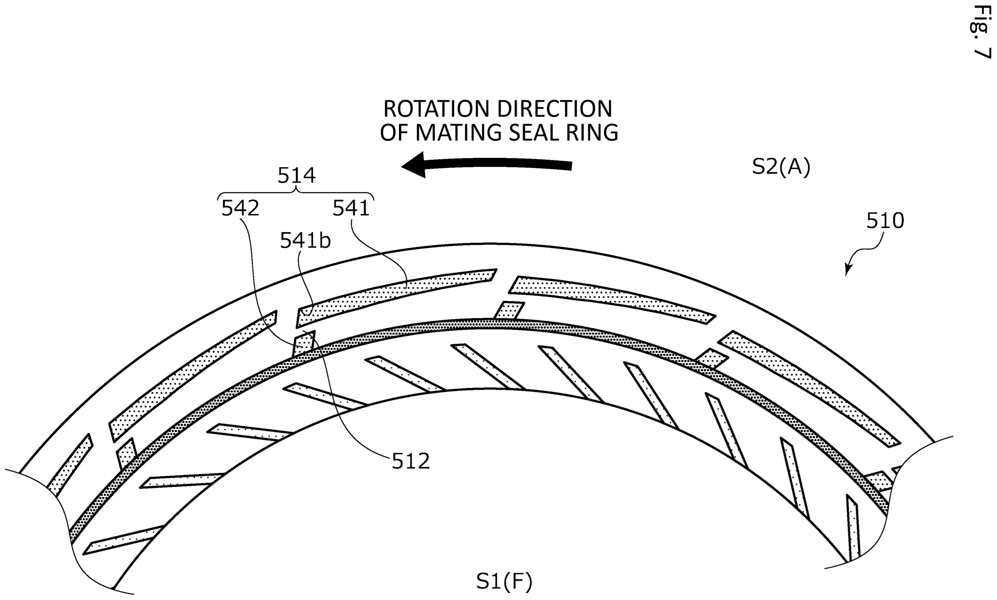

Next, sliding components according to a fifth embodiment will be described with reference to FIG. 7. Incidentally, the description of configurations that are the same as and overlap with the configurations of the first embodiment will be omitted.

As illustrated in FIG. 7, in a stationary seal ring 510 as one of the sliding components according to the fifth embodiment, the shape of a fluid recovery groove 514 is different from the shape of the fluid recovery groove 14 of the first embodiment.

The fluid recovery groove 514 of the fifth embodiment is partitioned into a first groove portion 541 and a second groove portion 542 in the radial direction by a land 512. Namely, the first groove portion 541 and the second groove portion 542 do not communicate with each other. An end portion 541b of the first groove portion 541 on the downstream side in the relative rotation is a circumferential end portion of the fluid recovery groove 514 on the downstream side in the relative rotation direction.

According to this configuration, positive pressure is generated at the end portion 541b of the first groove portion 541 on the downstream side in the relative rotation and in the vicinity of the end portion 541b, and a part of the fluid that has flowed into a gap between the sliding surfaces from the end portion 541b can be recovered by the second groove portion 542. In addition, another part of the fluid that has flowed into the gap between the sliding surfaces from the end portion 541b is recovered by the first groove portion 541 of the fluid recovery groove 514 on the downstream side in the relative rotation.

### {Sixth embodiment}

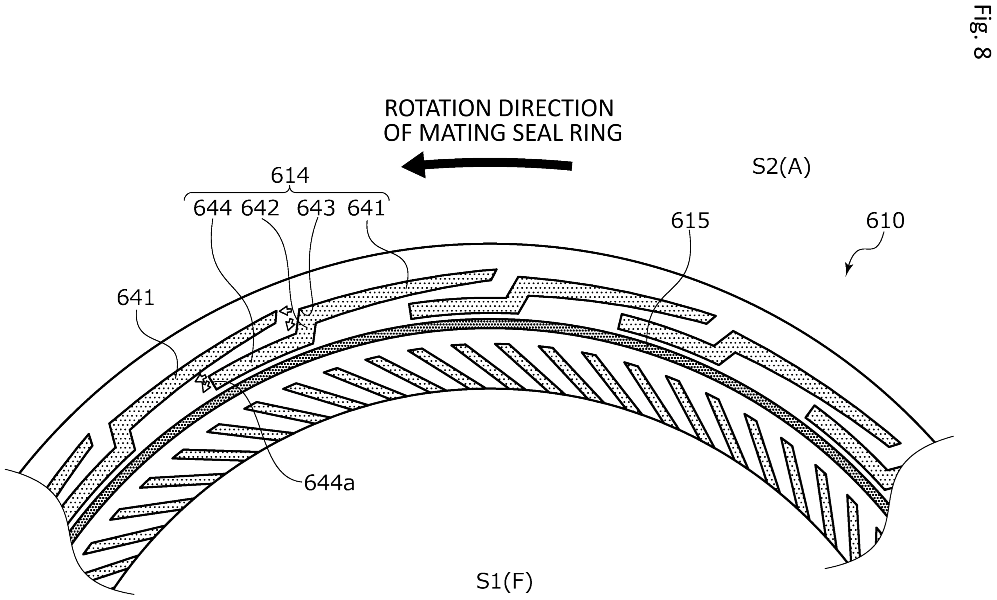

Next, sliding components according to a sixth embodiment will be described with reference to FIG. 8. Incidentally, the description of configurations that are the same as and overlap with the configurations of the first embodiment will be omitted.

As illustrated in FIG. 8, a fluid recovery groove 614 of a stationary seal ring 610 as one of the sliding components according to the sixth embodiment includes a third groove portion 644 extending in the circumferential direction from a radial inner end portion of a second groove portion 642. Namely, the fluid recovery groove 614 is formed in a substantially inverted Z-shape when viewed in the axial direction by a first groove portion 641, the second groove portion 642, and the third groove portion 644. An end portion 644a of the third groove portion 644 on the downstream side in the relative rotation is a circumferential end portion of the fluid recovery groove 614 on the downstream side in the relative rotation direction. Incidentally, the third groove portion 644 is disposed on the radial inner side of the first groove portion 641 of the fluid recovery groove 614 on the downstream side in the relative rotation.

A part of the fluid that has flowed into a gap between the sliding surfaces from a corner portion 643 of the fluid recovery groove 614 is recovered in the third groove portion 644, and another part of the fluid is recovered in the first groove portion 641 of the adjacent fluid recovery groove 614. In addition, the fluid that has moved to the radial inner side along the second groove portion 642 flows into the gap between the sliding surfaces from the end portion 644a of the third groove portion 644. Accordingly, positive pressure is generated at the end portion 644a and in the vicinity thereof.

In addition, a part of the fluid that has flowed into the gap between the sliding surfaces from the end portion 644a is recovered in an annular groove 615, and another part of the fluid is recovered in the first groove portion 641 of the adjacent fluid recovery groove 614.

### {Seventh embodiment}

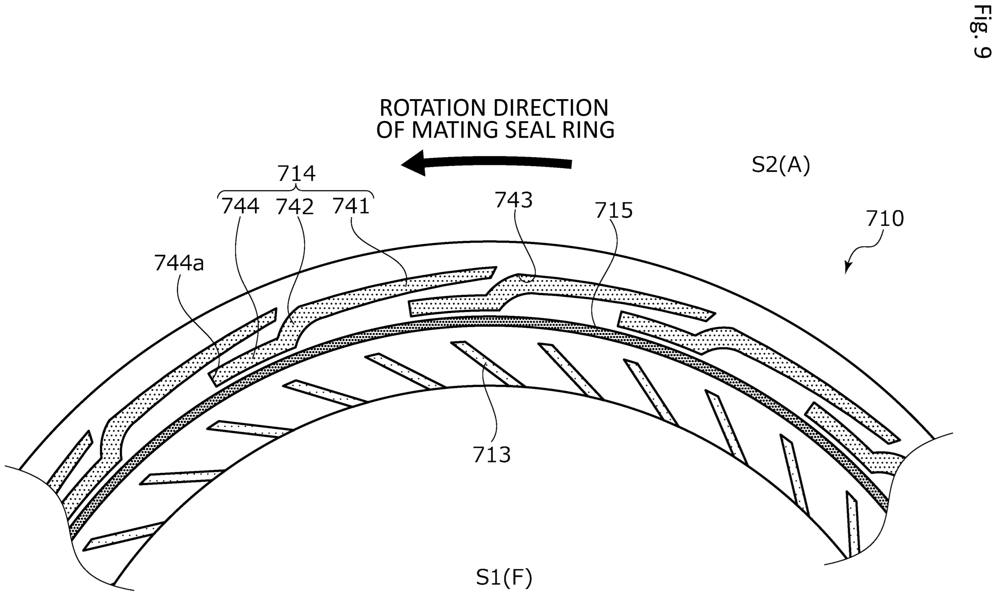

Next, sliding components according to a seventh embodiment will be described with reference to FIG. 9. Incidentally, the descriptions of configurations that are the same as and overlap with the configurations of the sixth embodiment will be omitted.

As illustrated in FIG. 9, in a stationary seal ring 710 as one of the sliding components according to the seventh embodiment, a second groove portion 742 of a fluid recovery groove 714 extends in an arc shape from a downstream end portion of a first groove portion 741 in the rotation direction of the rotating seal ring 20 toward a third groove portion 744 so as to be convex toward the radial outer side. According to this configuration, since the fluid flows into a gap between the sliding surfaces from an end portion 744a of the third groove portion 744, positive pressure is generated at the end portion 744a and in the vicinity thereof. Therefore, since in addition to corner portions 743 and the end portions 744a existing alternately in the circumferential direction on the leakage side and an annular groove 715 side, respectively, as positive pressure generation locations on the leakage side (radial outer side) of an annular groove 715, dynamic pressure grooves 713 are located on the sealed fluid side (radial inner side) of the annular groove 715, the positive pressure generation effect can be evenly improved in the radial direction, and the floating balance between the stationary seal ring 10 and the rotating seal ring 20 can be further improved, so that lubrication between the sliding surfaces can be enhanced.

Further, the second groove portion 742 extends in an arc shape so as to be convex toward the radial outer side. Accordingly, the fluid recovery groove 714 further suppresses the generation of positive pressure at the corner portion 743, and more easily returns the recovered fluid into the annular groove 715, compared to the fluid recovery groove 614 of the sixth embodiment.

### {Eighth embodiment}

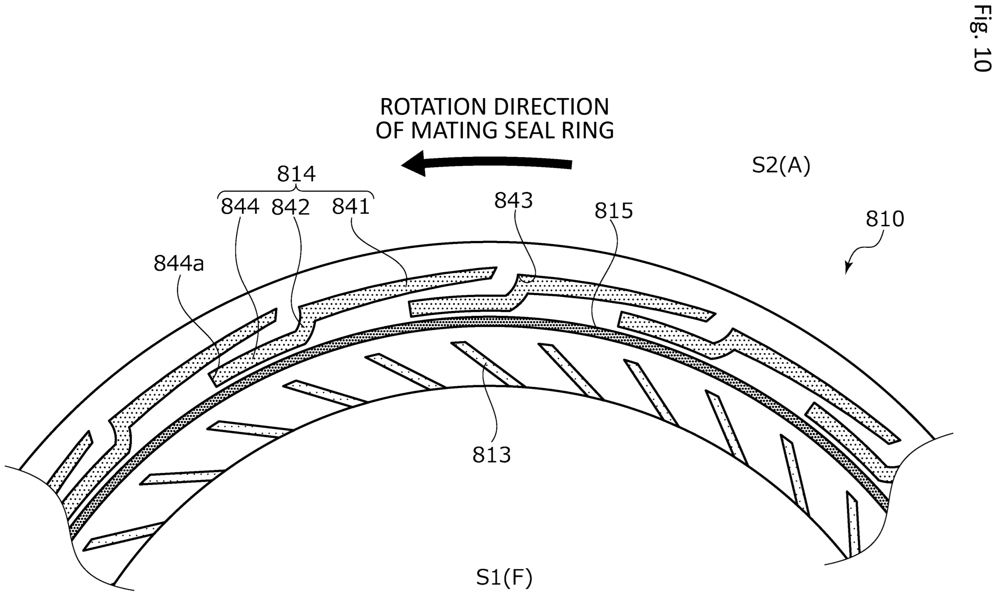

Next, sliding components according to an eighth embodiment will be described with reference to FIG. 10. Incidentally, the descriptions of configurations that are the same as and overlap with the configurations of the sixth embodiment will be omitted.

As illustrated in FIG. 10, in a stationary seal ring 810 as one of the sliding components according to the eighth embodiment, a second groove portion 842 of a fluid recovery groove 814 extends in an arc shape from a downstream end portion of a first groove portion 841 in the rotation direction of the rotating seal ring 20 toward a third groove portion 844 so as to be convex toward the radial inner side. According to this configuration, since the fluid flows into a gap between the sliding surfaces from an end portion 844a of the third groove portion 844, positive pressure is generated at the end portion 844a and in the vicinity thereof. Therefore, since in addition to corner portions 843 and the end portions 844a existing alternately in the circumferential direction on the leakage side and an annular groove 815 side, respectively, as positive pressure generation locations on the leakage side (radial outer side) of an annular groove 815, dynamic pressure grooves 813 are located on the sealed fluid side (radial inner side) of the annular groove 815, the positive pressure generation effect can be evenly improved in the radial direction, and the floating balance between the stationary seal ring 10 and the rotating seal ring 20 can be further improved, so that lubrication between the sliding surfaces can be enhanced.

Further, the second groove portion 842 extends in an arc shape so as to be convex toward the radial inner side. Accordingly, the corner portion 843 of the fluid recovery groove 814 is formed at a more acute angle than the corner portion 643 of the sixth embodiment. According to this configuration, the positive pressure generated at the corner portion 843 is higher and the flow rate returning into the annular groove 815 is smaller compared to the fluid recovery groove 614 of the sixth embodiment.

### {Ninth embodiment}

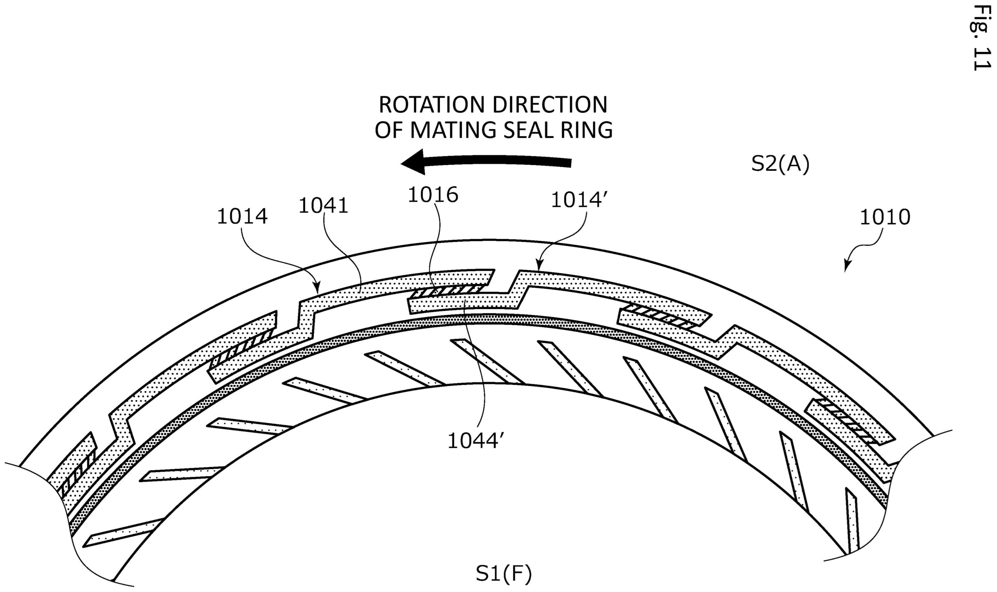

Next, sliding components according to a ninth embodiment will be described with reference to FIG. 11. Incidentally, the descriptions of configurations that are the same as and overlap with the configurations of the sixth embodiment will be omitted.

As illustrated in FIG. 11, in a stationary seal ring 1010 as one of the sliding components according to the ninth embodiment, a plurality of inclined grooves 1016 (for example, four in the ninth embodiment) are provided between a first groove portion 1041 of a fluid recovery groove 1014 and a third groove portion 1044' of a fluid recovery groove 1014' adjacent thereto on the upstream side in the circumferential direction.

The inclined grooves 1016 extend from the first groove portion 1041 toward the third groove portion 1044' while being inclined to the downstream side in the relative rotation. In addition, the inclined grooves 1016 are formed shallower than the fluid recovery groove 1014. Incidentally, the inclined grooves 1016 may have the same depth as the fluid recovery groove 1014.

According to this configuration, a part of the fluid recovered by the first groove portion 1041 can be introduced into the third groove portion 1044', and contribute to generating positive pressure at the third groove portion 1044'.

### {Tenth embodiment}

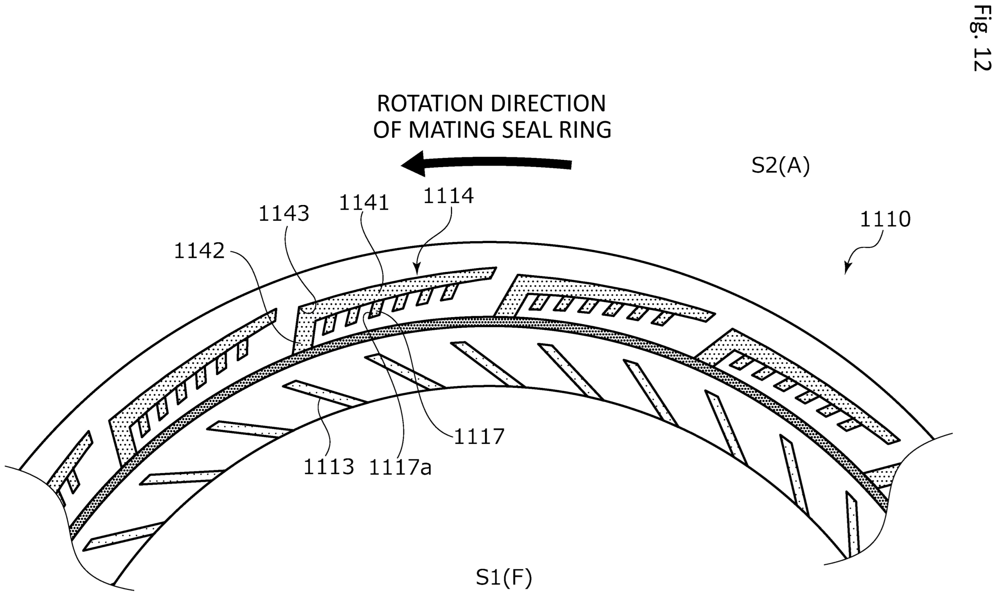

Next, sliding components according to a tenth embodiment will be described with reference to FIG. 12. Incidentally, the description of configurations that are the same as and overlap with the configurations of the first embodiment will be omitted.

As illustrated in FIG. 12, in a stationary seal ring 1110 as one of the sliding components according to the tenth embodiment, a fluid recovery groove 1114 is different from the fluid recovery groove 14 of the first embodiment.

A plurality of inclined grooves 1117 (for example, six in the tenth embodiment) extending linearly toward the radial inner side while being inclined to the downstream side in the relative rotation are provided on the radial inner side of a first groove portion 1141 of the fluid recovery groove 1114. Radial outer ends of the inclined grooves 1117 communicate with the first groove portion 1141, and radial inner ends thereof are closed end portions 1117a.

A second groove portion 1142 and the inclined grooves 1117 are disposed on the radial inner side of a corner portion 1143 of the fluid recovery groove 1114. According to this configuration, positive pressure can be generated at the corner portion 1143, the closed end portion 1117a of each of the inclined grooves 1117, and dynamic pressure grooves 1113.

### {Eleventh embodiment}

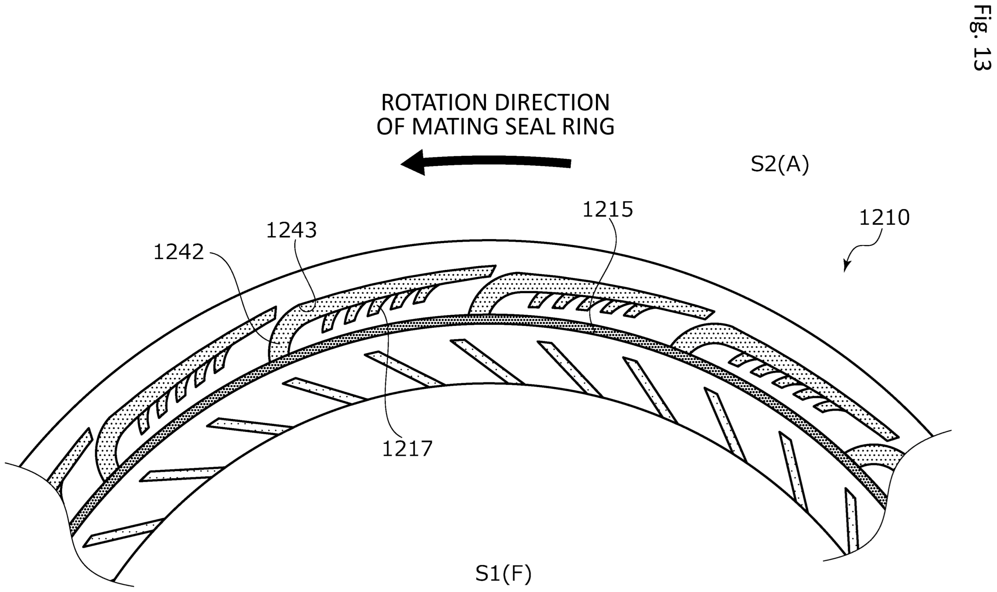

Next, sliding components according to an eleventh embodiment will be described with reference to FIG. 13. Incidentally, the descriptions of configurations that are the same as and overlap with the configurations of the tenth embodiment will be omitted.

As illustrated in FIG. 13, a second groove portion 1242 and an inclined groove 1217 of a stationary seal ring 1210 as one of the sliding components according to the eleventh embodiment extend in an arc shape so as to be convex toward the radial outer side. According to this configuration, the generation of positive pressure at a corner portion 1243 is suppressed, and the recovered fluid is easily returned to an annular groove 1215.

### {Twelfth embodiment}

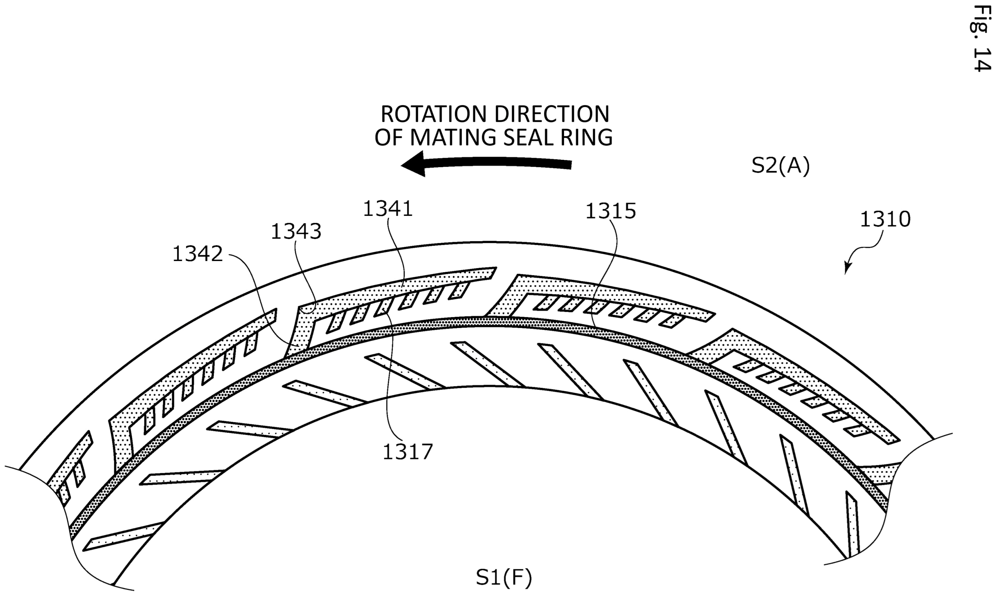

Next, sliding components according to a twelfth embodiment will be described with reference to FIG. 14. Incidentally, the descriptions of configurations that are the same as and overlap with the configurations of the tenth embodiment will be omitted.

As illustrated in FIG. 14, a second groove portion 1342 and an inclined groove 1317 of a stationary seal ring 1310 as one of the sliding components according to the twelfth embodiment extend in an arc shape so as to be convex toward the radial inner side. Here, a downstream end portion of a first groove portion 1341 on the rotation direction of the rotating seal ring 20 extends in an arc shape toward an annular groove 1315 so as to be convex toward the radial inner side. Accordingly, a corner portion 1343 is formed at a more acute angle than that in the eleventh embodiment. According to this configuration, the positive pressure generated at the corner portion 1343 is higher and the flow rate returning into the annular groove 1315 is smaller compared to the fluid recovery groove 1114 of the eleventh embodiment.

### {Thirteenth embodiment}

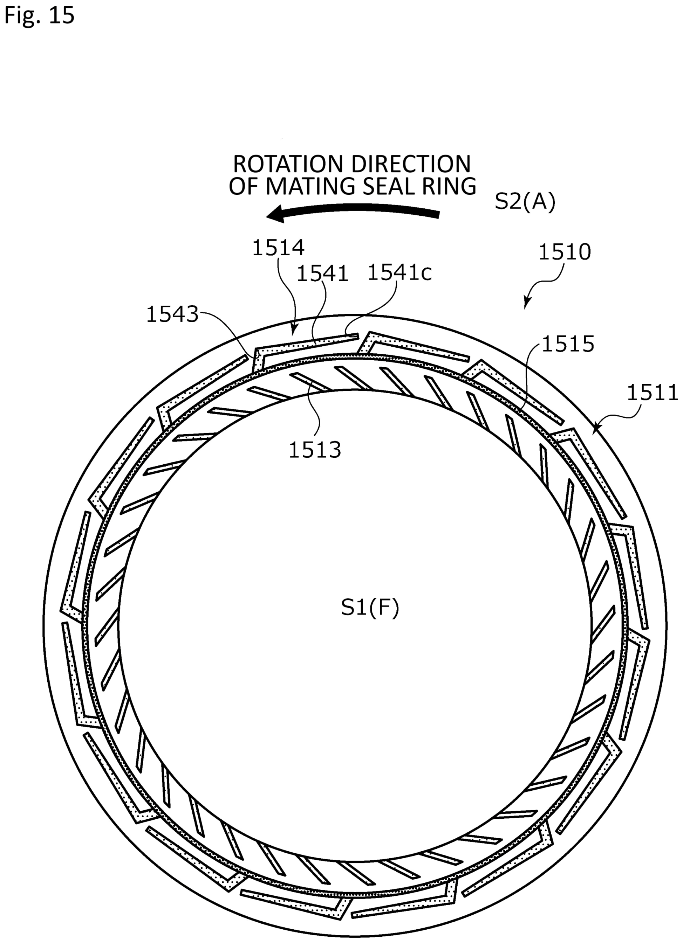

Next, sliding components according to a thirteenth embodiment will be described with reference to FIG. 15. Incidentally, the description of configurations that are the same as and overlap with the configurations of the first embodiment will be omitted.

A plurality of fluid recovery grooves 1514, a plurality of dynamic pressure grooves 1513, and an annular groove 1515 are formed on a sliding surface 1511 of a stationary seal ring 1510 as one of the sliding components according to the thirteenth embodiment.

An end 1541c of each of first groove portions 1541 on the upstream side in the rotation direction of the rotating seal ring 20 overlaps, in the circumferential direction, a corner portion 1543 of the adjacent fluid recovery groove 1514 on the upstream side in the rotation direction of the rotating seal ring 20. Incidentally, being disposed at positions overlapping each other when viewed in the circumferential direction is referred to as overlapping in the circumferential direction in the present invention. Similarly, being disposed at positions overlapping each other when viewed in the radial direction is referred to as overlapping in the radial direction in the present invention.

In addition, each of the first groove portions 1541 extends linearly. Therefore, one polygonal shape is drawn by extending each of the first groove portions 1541 in the circumferential direction. Incidentally, the number of the first groove portions 1541 can be freely changed, and in that case, one polygonal shape having that number of sides is drawn.

According to this configuration, the first groove portion 1541 can efficiently recover the sealed fluid F that has flowed into a gap between the sliding surfaces 1511 and 21 from the corner portion 1543 of the adjacent first groove portions 1541 on the upstream side in the rotation direction of the rotating seal ring 20.

### {Fourteenth embodiment}

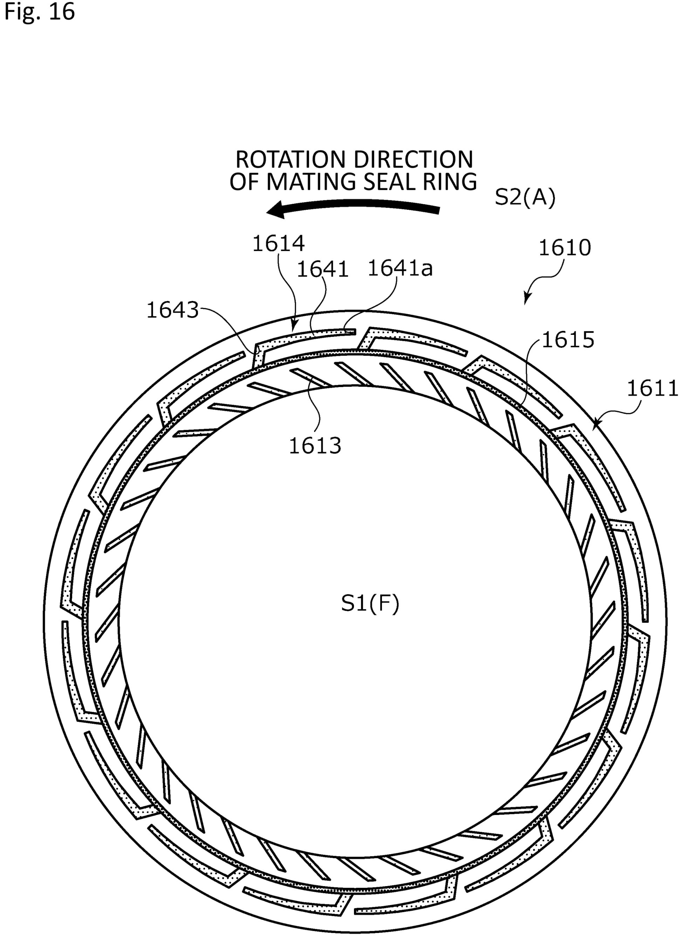

Next, sliding components according to a fourteenth embodiment will be described with reference to FIG. 16. Incidentally, the description of configurations that are the same as and overlap with the configurations of the first embodiment will be omitted.

A plurality of fluid recovery grooves 1614, a plurality of dynamic pressure grooves 1613, and an annular groove 1615 are formed on a sliding surface 1611 of a stationary seal ring 1610 as one of the sliding components according to the fourteenth embodiment.

First groove portions 1641 of the fluid recovery grooves 1614 are formed in an arc shape with the same curvature, and are disposed on the same circumference. In addition, the curvature of each of the first groove portions 1641 is substantially the same as the curvature of the stationary seal ring 1610. In addition, one circle is drawn by extending each of the first groove portions 1641 in the circumferential direction.

In addition, an upstream end 1641a of each of the first groove portions 1641 on the upstream side in the rotation direction of the rotating seal ring 20 overlaps, in the circumferential direction, a corner portion 1643 of the adjacent fluid recovery groove 1614 on the upstream side in the rotation direction of the rotating seal ring 20.

According to this configuration, the first groove portion 1641 can guide the sealed fluid F along the rotation direction. In addition, the sealed fluid F that has flowed into a gap between the sliding surfaces 1611 and 21 from the corner portion 1643 of the adjacent fluid recovery groove 1614 on the upstream side in the rotation direction of the rotating seal ring 20 is also easily moved along the rotation direction. Accordingly, the stationary seal ring 1610 can evenly recover the sealed fluid F.

### {Fifteenth embodiment}

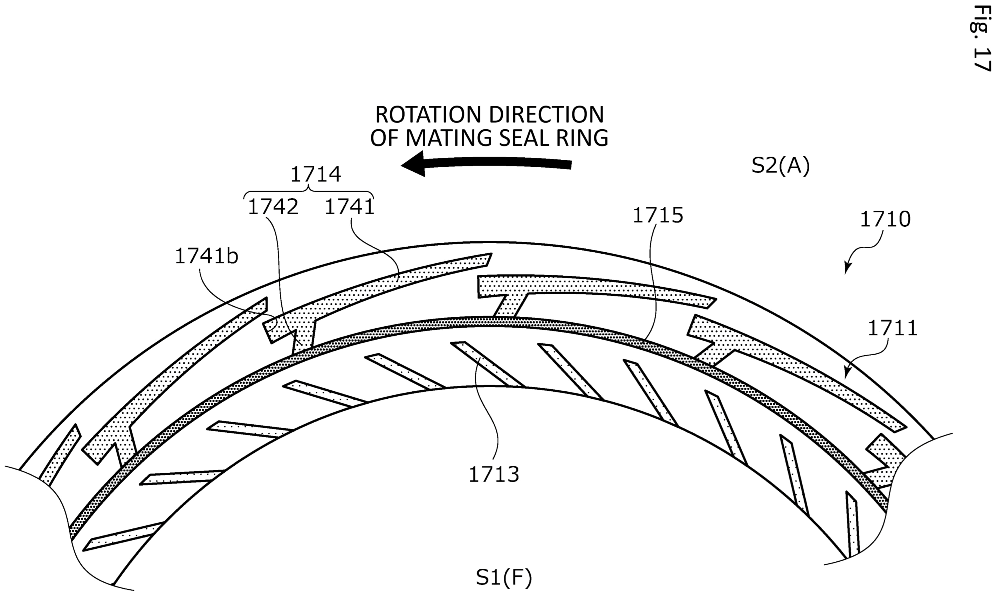

Next, sliding components according to a fifteenth embodiment will be described with reference to FIG. 17. Incidentally, the description of configurations that are the same as and overlap with the configurations of the first embodiment will be omitted.

A plurality of fluid recovery grooves 1714, a plurality of dynamic pressure grooves 1713, and an annular groove 1715 are formed on a sliding surface 1711 of a stationary seal ring 1710 as one of the sliding components according to the fifteenth embodiment.

The fluid recovery groove 1714 communicates with a second groove portion 1742 at a position away to the upstream side from an end portion 1741b of a first groove portion 1741, the end portion 1741b serving as a pressure generation portion and located on the downstream side in the relative rotation of the rotating seal ring 20.

According to this configuration, positive pressure can be generated at the end portion 1741b of the first groove portion 1741 and in the vicinity thereof. In addition, another part of the fluid that has flowed into the gap between the sliding surfaces from the end portion 1741b is recovered by the first groove portion 1741 of the fluid recovery groove 1714 on the downstream side in the relative rotation.

### {Sixteenth embodiment}

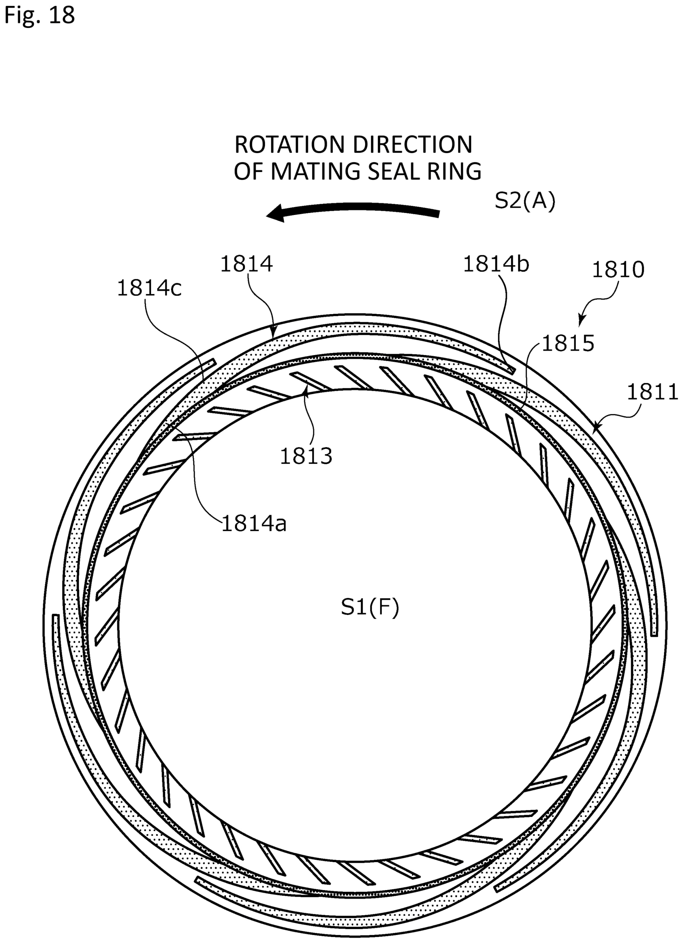

Next, sliding components according to a sixteenth embodiment will be described with reference to FIG. 18. Incidentally, the description of configurations that are the same as and overlap with the configurations of the first embodiment will be omitted.

A plurality of fluid recovery grooves 1814, a plurality of dynamic pressure grooves 1813, and an annular groove 1815 are formed on a sliding surface 1811 of a stationary seal ring 1810 as one of the sliding components according to the sixteenth embodiment.

The fluid recovery groove 1814 is formed in an arc shape that is convex toward the radial outer side, and that has a substantially constant curvature smaller than the curvature of the corner portion 343 of the second embodiment. An end portion 1814a of the fluid recovery groove 1814 on the downstream side in the rotation direction of the rotating seal ring 20 communicates with an annular groove 1815. An end portion 1814b of the fluid recovery groove 1814 on the upstream side in the rotation direction of the rotating seal ring 20 is closed.

In addition, the fluid recovery groove 1814 includes a curved portion 1814c on the downstream side in the relative rotation direction, the curved portion 1814c extending from a circumferential center of the fluid recovery groove 1814 to the radial inner side toward the end portion 1814a, and toward the downstream side in the rotation direction of the rotating seal ring 20. A slight positive pressure is generated at the curved portion 1814c. In such a manner, the curved portion 1814c functions as a pressure generation portion of the fluid recovery groove 1814.

According to this configuration, the fluid recovery groove 1814 of the present embodiment further suppresses the generation of positive pressure at the curved portion 1814c, and more easily discharges the recovered fluid from the end portion 1814a into the annular groove 1815, compared to the fluid recovery groove 212 of the second embodiment.

### {Seventeenth embodiment}

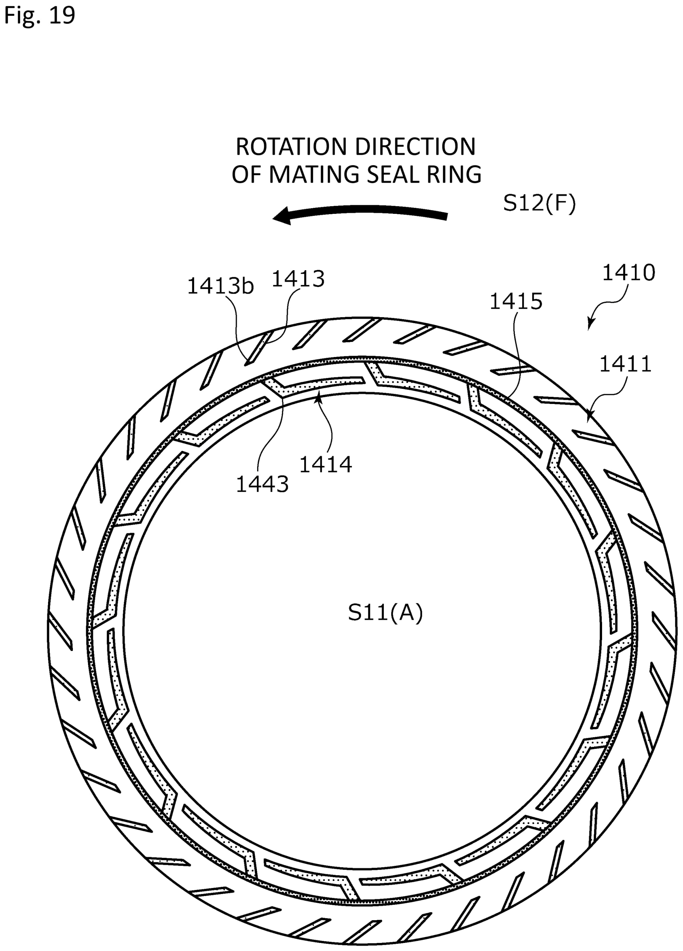

Next, sliding components according to a seventeenth embodiment will be described with reference to FIG. 19. Incidentally, the description of configurations that are the same as and overlap with the configurations of the first embodiment will be omitted.

A mechanical seal to which a stationary seal ring 1410 as one of the sliding components according to the seventeenth embodiment is applied is an inside mechanical seal that seals the sealed fluid F existing on the outer space S12 side of sliding surfaces 1411 and 21, and that allows the inner space S11 to communicate with the atmosphere A.

A plurality of fluid recovery grooves 1414, a plurality of dynamic pressure grooves 1413, and an annular groove 1415 are formed on the sliding surface 1411.

The fluid recovery groove 1414 and the dynamic pressure groove 1413 have a shape obtained by substantially inverting the fluid recovery groove 14 and the dynamic pressure groove 13 of the first embodiment in the radial direction.

Accordingly, as illustrated by solid arrows, positive pressure is generated at a corner portion 1443 of the fluid recovery groove 1414 and in the vicinity thereof due to the rotation of the rotating seal ring 20. In addition, positive pressure is generated at a radial outer end 1413b of the dynamic pressure groove 1413 and in the vicinity thereof.

In such a manner, the sliding components of the present invention may be applied to an environment in which the sealed fluid space is located on the radial outer side of the sliding surfaces and the leakage space is located on the radial inner side of the sliding surfaces.

The embodiments of the present invention have been described above with reference to the drawings; however, specific configurations are not limited to these embodiments, and modifications or additions that are made without departing from the scope of the present invention are also included in the present invention.

For example, in the first to seventeenth embodiments, the mechanical seal for an automobile has been described as an example of the sliding components; however, the present invention may be applied to other mechanical seals for general industrial machines and the like. In addition, the present invention is not limited to the mechanical seal, and may be applied to sliding components other than the mechanical seal, such as a slide bearing.

In addition, in the first to seventeenth embodiments, the sealed fluid has been described as a high-pressure liquid; however, the present invention is not limited thereto, and the sealed fluid may be a gas or a low-pressure liquid or may be a mist mixture of liquid and gas.

In addition, in the first to seventeenth embodiments, the fluid on the leakage space side has been described as the atmosphere that is a low-pressure gas; however, the present invention is not limited thereto, and the fluid may be a liquid or a high-pressure gas or may be a mist mixture of liquid and gas.

In addition, in the first to seventeenth embodiments, the sealed fluid space side and the leakage space side have been described as a high-pressure side and a low-pressure side, respectively; however, the sealed fluid space side and the leakage space side may be a low-pressure side and a high-pressure side, respectively, or the sealed fluid space side and the leakage space side may have substantially the same pressure.

In addition, in the first to seventeenth embodiments, an example in which the dynamic pressure generation grooves and the fluid recovery grooves are provided in the stationary seal ring has been described; however, the dynamic pressure generation grooves and the fluid recovery grooves may be provided in the rotating seal ring.

### {REFERENCE SIGNS LIST}

{ 0134 }
- 10: Stationary seal ring (sliding component)
- 11: Sliding surface
- 13: Dynamic pressure groove (dynamic pressure generation groove)
- 13b: Radial outer end (dynamic pressure generation portion)
- 14: Fluid recovery groove
- 15: Annular groove (circumferential groove)
- 20: Rotating seal ring (sliding component)
- 21: Sliding surface
- 141: First groove portion
- 142: Second groove portion
- 143: Corner portion (pressure generation portion)
- A: Atmosphere (fluid on leakage space side)
- F: Sealed fluid
- S1: Inner space (sealed fluid space)
- S2: Outer space (leakage space)

## Claims

1. Sliding components of which a pair of sliding surfaces rotate relative to each other and which partition a sealed fluid space and a leakage space off from each other,
wherein at least one of the sliding surfaces is provided with a dynamic pressure generation groove, a fluid recovery groove provided on a leakage space side with respect to the dynamic pressure generation groove and including at least one pressure generation portion that is a circumferential end portion, a curved portion, or a bent portion, and a circumferential groove provided between the dynamic pressure generation groove and the fluid recovery groove in a radial direction and extending in a circumferential direction.

2. The sliding components according to claim 1,
wherein the fluid recovery groove includes a first groove portion extending in the circumferential direction, and a second groove portion curved or bent from the first groove portion and extending toward the circumferential groove, and the pressure generation portion is a bent portion between the first groove portion and the second groove portion.

3. The sliding components according to claim 1,
wherein the circumferential groove has an annular shape.

4. The sliding components according to claim 1,
wherein the fluid recovery groove communicates with the circumferential groove.

5. The sliding components according to claim 1,
wherein the one of the sliding surfaces is further provided with a communication groove that causes the circumferential groove and the sealed fluid space to communicate with each other.

6. The sliding components according to any one of claims 1 to 5,
wherein the circumferential groove is deeper than the fluid recovery groove.

7. The sliding components according to claim 2,
wherein an upstream end of the first groove portion of the fluid recovery groove and the bent portion of the adjacent fluid recovery groove on an upstream side in the relative rotation overlap each other in the circumferential direction.

8. The sliding components according to claim 2,
wherein the adjacent first groove portions are aligned in one circle line.
